# NEUE EUROPÄISCHE PATENTSCHRIFT

(11) **EP 0 189 076 B2**
(45) Veröffentlichungstag und Bekanntmachung des Hinweises auf die Entscheidung über den Einspruch: **31.03.1993**
(45) Hinweis auf die Patenterteilung: 13.12.1989
(21) Anmeldenummer: 86100312.7
(22) Anmeldetag: 11.01.1986
(51) Int. Cl.: B60T 13/66

(54) **Bremsdruckregeleinrichtung**
Brake pressure regulating installation
Installation de régulation de la pression de freinage

(30) Priorität: 23.01.1985 DE 3502051
(43) Veröffentlichungstag der Anmeldung: 30.07.1986
(73) Patentinhaber: WABCO Vermögensverwaltungs-GmbH, D-30432 Hannover (DE)
(72) Erfinder: Reinecke, Erich, Ing.grad., D-3167 Burgdorf Beinhorn (DE)
(74) Vertreter: Schrödter, Manfred, Dipl.-Ing.

(56) Entgegenhaltungen:
- WO-A-84/00406
- DE-A- 2 622 746
- DE-A- 3 018 188
- DE-A- 3 205 846
- DE-A- 3 226 074
- DE-U- 7 727 421
- US-A- 2 844 227
- US-A- 4 020 454

## Beschreibung

Die Erfindung betrifft eine Bremsdruckregeleinrichtung nach dem Oberbegriff der Patentansprüche 1 und 2.

Eine derartige Bremsdruckregeleinrichtung ist aus der DE-A2 622 746 bekannt. In dieser wird in der Bremsanlage eines Fahrzeugs die Beaufschlagung druckmittelbetätigter Radbremsen mit Bremsdruck mittels einer willkürlich betätigbaren Bremsauslöseeinrichtung gesteuert. Die Bremsauslöseeinrichtung wird vom Fahrer über Hand- oder Fußkraft betätigt und steuert die Höhe des Bremsdrucks abhängig von der Betätigungskraft oder dem Betätigungsweg. Der Bremsauslöseeinrichtung sind hier zusätzlich elektrisch steuerbare Druckregelventile nachgeschaltet, die jeweils wenigstens einer Radbremse des Fahrzeugs zugeordnet sind. Ferner sieht diese Bremsdruckregeleinrichtung eine Steuerelektronik vor, die Ausgangssignale von Sensoreinrichtungen zu Steuersignalen für die Druckregelventile verarbeitet.

Als Sensoreinrichtungen dienen dabei den Rädern oder Achsen zugeordnete Radschlupfsensoreinrichtungen und Achslastensoreinrichtungen sowie Bremsdrucksensoreinrichtungen, die den jeweils einem Druckregelventil zugeordneten Radbremsen zugeordnet sind. Mittels der Ausgangssignale der Sensoreinrichtungen steuert die Steuerelektronik der bekannten Bremsdruckregeleinrichtung die Druckregelventile so, daß beim Bremsen den Radbremsen einzeln oder achsweise ein lastabhängig eingestellter Bremsdruck zugeführt und ein Radblockieren verhindert wird. Die Einstellung des Bremsdrucks erfolgt dabei für jede Radbremse oder Achse unabhängig von den anderen Radbremsen oder Achsen. Die Steuerelektronik ermittelt dabei anhand der Ausgangssignale der Radschlupf- und Achslastsensoreinrichtungen für die Radbremsen radweise oder achsweise Soll-Bremsdrücke. Die Bremsdrucksensoreinrichtung dienen dabei derradweisen oderachsweisen Rückmeldung der Ist-Bremsdrücke unabhängig von den anderen Radbremsen oder Achsen.

Im Falle einer Fahrzeugkombination bzw. eines Anhängers enthält die erwähnte Bremsauslöseeinrichtung eine von dem Bremsdruck im Kraftfahrzeug gesteuerte Einrichtung zur Mitsteuerung des Bremsdruckes zu den Radbremsen des Anhängers.

Da die zu den Radbremsen gehörigen Bauteile Fertigungstoleranzen und Schwankungen der Stoffwerte der in ihnen verwendeten Werkstoffe, beispielsweise Reibwertschwankungen des Bremsbelags, aufweisen, können die Radbremsen auf beiden Seiten einer Achse und/oder die Radbremsen einer oder mehrerer Vorderachsen gegenüber den Radbremsen einer oder mehrerer Hinterachsen des Kraftfahrzeugs oder des Anhängers oder der Fahrzeugkombination und/oder die Radbremsen des Kraftfahrzeugs gegenüber den Radbremsen des Anhängers bei gleichem von der Bremsauslöseeinrichtung ausgesteuerten Bremsdruck ungleiche Bremskräfte bzw. Bremsmomente erzeugen.

Der Erfindung liegt deshalb die Aufgabe zugrunde, eine Bremsdruckregeleinrichtung der eingangs genannten Art so zu verbessern, daß sie mit einfachen Mitteln eine Angleichung der von den Radbremsen auf der linken und der rechten Fahrzeugseite einer oder mehrerer Achsen und/oder einer oder mehrerer Vorderachsen und einer oder mehrerer Hinterachsen des Kraftfahrzeuges oder des Anhängers oder der Fahrzeugkombination und/oder des Kraftfahrzeugs und des Anhängers erzeugte Bremskräfte bzw. Bremsmomente ermöglicht.

Diese Aufgabe wird durch die in den Patentansprüchen 1 und 2 angegebene Erfindung gelöst. Weiterbildungen und vorteilhafte Ausgestaltungen der Erfindung sind in den Unteransprüchen angegeben.

Die Erfindung läßt sich sowohl bei pneumatisch als auch bei hydraulisch betätigten Radbremsen als auch bei einer Kombination dieser Betätigungsarten ausführen.

Die Erfindung läßt sich sowohl bei einer fremdkraftbetätigten als auch einer fremdkraftunterstützten als auch bei einer muskelkraft betätigten Bremsanlage ausführen.

Die Erfindung ermöglicht die Angleichung der Bremskräfte bzw. Bremsmomente der Radbremsen an beiden Seiten einer oder mehrerer Achsen des Kraftfahrzeugs und/oder des Anhängers.

Die Erfindung ermöglicht auch die Angleichung der Bremskräfte bzw. Bremsmomente der Radbremsen an einer oder mehreren Achsen des Kraftfahrzeugs an die Bremskräfte bzw. Bremsmomente der Radbremsen an einer oder mehreren Achsen des Anhängers.

Die Erfindung ermöglicht auch die Angleichung der Bremskräfte bzw. Bremsmomente der Radbremsen einer oder mehrerer Achsen des Kraftfahrzeugs oder des Anhängers an die Bremskräfte bzw. Bremsmomente der Rad bremsen einer oder mehrerer anderer Achsen des Kraftfahrzeugs oder des Anhängers.

Die Erfindung ermöglicht auch die Angleichung der Gesamt bremskraft der Radbremsen eines Kraftfahrzeugs an die Gesamtbremskraft der Radbremsen des Anhängers, wenn beide in einer Fahrzeugkombination zusammengefaßt sind.

Im Fall einer Fahrzeugkombination erbringt die Erfindung die vorstehend erwähnten Vorteile insbesondere dann, wenn Kraftfahrzeug und Anhänger bzw. die bremskraftmäßig anzugleichenden Achsen einen im wesentlichen gleichen relativen Auslastungsgrad haben.

Die Radbremsen können in Bremskreisen zusammengefaßt sein. Beispielsweise können die Radbremsen von einer oder mehreren Vorderachsen oder die Radbremsen von einer oder mehreren Hinterachsen des Kraftfahrzeugs und/oder des Anhängers jeweils zu einem Bremskreis zusammengefaßt sein. Es können auch Radbremsen an diagonal einander gegenüberliegenden Achsseiten oder Teile davon zu einem Bremskreis zusammengefaßt sein. Es kann auch das Kraftfahrzeug oder der Anhänger mehrere Bremskreise und der jeweils andere Teil der Fahrzeugkombination nur einen Bremskreis aufweisen.

Das Kraftfahrzeug und/oder der Anhänger können in bekannterWeiseeinerodermehrerenAchsenodereiner oder mehreren Radbremsen zugeordnete zusätzliche Bremsdruckregler, z.B. verzögerungsabhängiger Bremskraftregler, retardermomentabhängiger Bremskraftregler, aufweisen.

In Ausführungsformen, in denen die Bremskräfte bzw. Bremsmomente der Radbremsen an beiden Seiten einer oder mehrerer Achsen des Kraftfahrzeugs und/oder des Anhängers angeglichen werden sollen, ist auch die Verwendung bekannter lastabhängiger Bremskraftregler (ALB) möglich.

Die Erfindung kann gegenüber den genannten zusätzlichen Bremskraftreglern mit einer Vorrangschaltung für Teilbremsungen ausgebildet sein. Da sich der überwiegende Teil aller Bremsbetätigungen im Teilbremsbereich abspielt, können aufdiese Weise die Vorteile der Erfindung zur Wirkung gebracht werden, ohne die Gesamtauslegung der Bremsanlage nachteilig zu berühren.

Die Erfindung schlägt in einer Ausgestaltung die Sensierung der Bremskräfte bzw. Bremsmomente wenigstens zweier Radbremsen vor, wobei die Sensoren in vorteilhafter Weise als die bremskraft- oder bremsmomentbedingte Verformung von Bauteilen, beispielsweise des Achskörpers, sensierende Verformungssensoren ausgebildet sein können.

In einer anderen Ausgestaltung schlägt die Erfindung die Sensierung der Temperaturen wenigstens zweier Radbremsen vor. Diese Ausgestaltung läßt sich vorteilhaft realisieren, wenn die Radbremsen in bekannter Weise als Trommel- oder Scheibenbremsen ausgebildet sind und der Temperatursensor in dem Bremsbelagträger und/oder dem Bremsbelag angeordnet ist. Der Temperatursensor könnte dabei an dem Bremsbelagträger oder Bremsbelag an einer geeigneten Stelle und in einem geeigneten Abstand von der Reibfläche angeordnet sein, derart, daß sich ein beanspruchungsproportionales Temperatursignal ergibt.

Bei der eben erwähnten Temperatursensorenanordnung kann es auch vorteilhaft sein, mehrere Temperatursensoren auf dem Umfang und/oder der Breite des Bremsbelags verteilt anzuordnen und als Temperatursignal den Mittelwert (arithmetisch oder gewichtet) der Signale der einzelnen Temperatursensoren heranzuziehen.

Vorteilhaft wäre auch, die Bremstrommel- bzw. Bremsscheibentemperatur zu sensieren, da hierbei durch die niedrige Wärmeleitfähigkeit des Bremsbelagwerkstoffes entstehende Verzerrungen und Verzögerungen ausgeschaltet und eine höhere Genauigkeit erreicht werden.

Es wäre auch denkbar, den Belagverschleiß bzw. die Restbelagdicke zu sensieren. Eine solche Ausführungsform würde angesichts der Abriebfestigkeit moderner Bremsbelagwertstoffe jedoch meßbare Verschleißwerte, insbesondere aber auswertbare Verschleißwertdifferenzen, nur in großen Betriebszeiträumen ergeben, wäre also sehr träge. Die vorliegende Erfindung hat demgegenüber den Vorteil, daß sie eine schnelle Reaktion auf festgestellte Ungleichmäßigkeiten an den sensierten Radbremsen ermöglicht.

In einer vorteilhaften Ausführungsform ist die Erfindung für einen Bremskreis eines Kraftfahrzeugs oder eines Anhängers geeignet, der für jede Fahrzeugseite wenigstens eine Radbremse oder eine Gruppe von Radbremsen aufweist, wobei in der Druckmittelzuleitung zu jeder Radbremse oder Gruppe von Radbremsen ein Druckregelventil angeordnet ist und wobei jeder Radbremse oder Gruppe von Radbremsen wenigstens ein Bremswert- oder Temperatursensor zugeordnet ist. In diesem Fall werden ausschließlich Ungleichmäßigkeiten an einer Achse überwacht und ausgeregelt, ohne daß es eine Rolle spielt, ob das absolute Bremsdruckniveau des Bremskreises durch zusätzliche Druckregler beeinflußt wird.

Die Erfindung ermöglicht, daß Giermomente ganz oder weitgehend vermieden werden, womit die Richtungsstabilität des Kraftfahrzeugs und/oder des Anhängers und/oder der Fahrzeugkombination verbessert wird.

Als weitere Vorteile bietet die Erfindung eine gleichmäßige oder gleichmäßigere Beanspruchung der Radbremsen und einen gleichmäßigen oder gleichmäßigeren Radbremsverschleiß, insbesondere Bremsbelagverschleiß. Diese Vorteile führen zu einer Steigerung der Wirtschaftlichkeit des Fahrzeugbetriebs.

Die Erfindung ist mit jeder bekannten Art Bremsauslöseeinrichtung durchführbar, insbesondere mit Motorwagenbremsventil oder mit elektrischer Bremsdrucksteuerung (EBS).

Im Falle einer EBS ist ein hand- oder fußbetätigter Bremsgeber vorgesehen, der ein betätigungskraft- oder betätigungswegabhängiges Ausgangssignal (Bremssignal) liefert.

In einer Ausführungsform der EBS ist wenigstens im Kraftfahrzeug, vorzugweise aber für jede Achse oder Radbremse, ein Druckmodulator vorgesehen, der aus einer zugeordneten Druckmittelquelle einen von der Stärke des Bremssignals abhängigen Bremsdruck aussteuert.

In einer anderen Ausführungsform der EBS ist eine vorzugsweise elektronische Bremsdruckregeleinrichtung und im Kraftfahrzeug und/oder im Anhänger ein Druckregelventil, vorzugsweise aber ein Druckregelventil je Achse oder je Radbremse und je Druckregelventil ein Bremsdrucksensorvorgesehen. In diesem Fall steuert die Bremsdruckregeleinrichtung mit dem Bremssignal als Führungsgröße und den Ausgangssignalen der Bremsdruckgeber als Regelgrößen durch die Steuerung der Druckregelventile den Bremsdruck.

Im Falle einer Fahrzeugkombination kann die Bremsauslöseeinrichtung zur Mitsteuerung des Bremsdruckes zu den Radbremsen des Anhängers ein Anhängersteuerventil oder eine Druckmittel- oder eine elektrische Steuerleitung zur Anhängerbremsanlage aufweisen.

In den Ausführungsformen mit Motorwagenbremsventil und EBS mit Druckmodulatoren sind die Druckregelventile zwischen den Radbremsen und dem Motorwagenbremsventil bzw. den Druckmodulatoren angeordnet. Im letzteren Fall können die Druckmodulatoren mit den Druckregelventilen zu Kombi-Modulatoren vereinigt sein.

In einer bevorzugten Ausführungsform weisen die Druckregelventile eine Durchgangsstellung, eine Sperrstellung und eine Druckabbaustellung auf. Sie sind damit zugleich als ABS-Ventile für eine Antiblockiereinrichtung (ABS) geeignet. Die Erfindung läßt sich deshalb vorteilhaft in einem Kraftfahrzeug und/oder einem Anhänger und/oder einer Fahrzeugkombination realisieren, welche eine ABS aufweisen, in welchem Falle die ABS gegenüber der Erfindung eine Vorrangschaltung haben muß.

In gewissen Ausführungsformen der Erfindung werden, vereinfachtausgedrückt, gemessene Bremskraft- bzw. Bremsmoment- oder Temperaturabweichungen noch während der laufenden Bremsbetätigung ausgeregelt. Der Begriff "Abweichung" beinhaltet dabei nicht nur die Abweichung der Bremswertsignale bzw. Temperatursignale relativ zueinander, sondern schließt auch eine Abweichung von einem lastabhängig vorgegebenen Vorgabewert ein. Dieser Vorgabewert kann beispielsweise zur Berücksichtigung unterschiedlicher relativer Auslastungsgrade der Achsen und/oderdes Kraftfahrzeugs und des Anhängers dienen. In diesen Fällen ist die Steuerelektronik so ausgebildet, daß sie das den Radbremsen mit dem stärkeren bzw. zu starken Bremswert- und/oder Temperatursignal zugeordnete Druckregelventil im Sinne einer Bremswert- oder Temperaturangleichung (aneinander und/oder an den Vorgabewert) steuert. Im Falle der Ausbildung der Druckregelventile als ABS-Ventile bedeutet dies, daß das ABS-Ventil im wesentlichen bis zum Abbau der Abweichung auf Null oder einen vorbestimmten Grenzwert aus der Durchgangsstellung in die Sperr- bzw. die Druckabbaustellung gesteuert wird. Der von der Steuerelektronik gebildete Sollwert ist in diesem Fall gleich Null oder dem Grenzwert.

In einer anderen Ausführungsform wird, vereinfacht ausgedrückt, aus den bei einer oder mehreren früheren Bremsbetätigungen gewonnenen Brems-und/oder Temperatursignalen als Sollwert ein Bremsdruckkorrekturwert gebildet, nach dem der von der Bremsauslöseeinrichtung zu den Radbremsen gelieferte Bremsdruck korrigiert wird. Dieser Bremsdruckkorrekturwert kann unterschiedliche relative Auslastungsgrade der Achsen und/oder des Kraftfahrzeugs und des Anhängers berücksichtigen. In dieser Ausführungsform wird der in den den Bremswertsensoren bzw. den Temperatursensoren zugeordneten Radbremsen sich aufbauende Druck durch Drucksensoren überwacht, deren Ausgangssignale (Bremsdrucksignale) der Steuerelektronik zugeführt werden. Die Steuerelektronik ist dabei derart ausgebildet, daß sie aus den bei oder nach der oder den früheren Bremsbetätigungen zugeführten Bremswert- bzw. Temperatursignalen, gegebenenfalls unter Berücksichtigung des relativen Auslastungsgrads der den sensierten Radbremsen zugeordneten Achsen bzw. Bestandteile der Fahrzeugkombination, als Sollwert einen Bremsdruckkorrekturwert bzw. ein Kennfeld für einen Bremsdruckkorrekturwert, insbesondere für die Differenz oder den Quotienten der den Radbremsen zugeführten Bremsdrücke errechnet und speichert und bei einer Bremsbetätigung nach dem jeweiligen Bremsdruckkorrekturwert durch Steuerung der Druckregelventile regelt. Die Steuerelektronik kann dabei ferner so ausgebildet sein, daß sie den Bremsdruckkorrekturwert bzw. sein Kennfeld anhand der bei oder nach der Bremsbetätigung zugeführten Bremswert- und/oder Temperatursignale aktualisiert. Die Signalauswertung nach der oder den früheren Bremsbetätigungen bzw. nach der Bremsbetätigung kommt insbesondere für die Temperatursignale in Betracht. Für diese Auswertung kann ein repräsentativer Zeitpunkt nach der Bremsbetätigung festgelegt werden, in dem sich unabhängig von dem instationären Temperaturverlaufwährend der Bremsbetätigung aussagefähige Meßergebnisse gewinnen lassen. Es ist in vorteilhafter Weise auch möglich, nicht die Bremswert- bzw. Temperatursignale jeder Bremsbetätigung zur Bildung des Bremsdruckkorrekturwertes bzw. zu dessen Aktualisierung heranzuziehen, sondern sich dabei auf die bei repräsentativen Bremszuständen gewonnenen Signale zu beschränken.

Die im Zusammenhang mit der zuletzt erwähnten Ausführungsform erforderlichen Bremsdrucksensoren können mit den bei der EBS erwähnten oder etwa für oder an den Druckmodulatoren vorgesehenen Bremsdrucksensoren vereinigt sein.

In den Varianten der beiden vorstehend erwähnten Ausführungsformen, in denen, wie erwähnt, die Steuerelektronik den Sollwert unter Berücksichtigung des Auslastungsgrads der verschiedenen Achsen bzw. Bestandteile der Fahrzeugkombination ermittelt, bietet die Erfindung eine Lösung für einen lastabhängigen Bremskraftregler (ALB), ohne daß es zusätzlicher Einrichtungen bedarf. Die Erfindung bietet die Möglichkeit der Kombination eines derartigen ALB mit einer Regelung auf Bremswert- bzw. Temperaturangleichung. Beispielsweise könnte die Steuerelektronik den Sollwert im Teilbremsbereich unterhalb einer Obergrenze des von der Bremsauslöseeinrichtung gelieferten Bremsdrucks bzw. ihrer Betätigungskraft oder ihres Betätigungsweges auf Angleichung und darüber lastabhängig bilden. Damit wird bei der überwiegenden Zahl aller Bremsbetätigungen, die sich im Teilbremsbereich abspielen, eine gleichmäßige Beanspruchung der Radbremsen sichergestellt, während bei höheren Abbremsungen die Bremssicherheit Vorrang erhält.

In diesem Fall müssen der Steuerelektronik auch die Auslastungsgrade der Achsen bzw. der Bestandteile der Fahrzeugkombination, die den von den Sensoreinrichtungen überwachten Radbremsen zugeordnet sind, kennzeichnende Lastsignale zugeführt werden.

Die Erfindung kann oberhalb eines vorbestimmten Wertes der Betätigungskraft oder des Betätigungswegs der Bremsenauslöseeinrichtung oder des von dieser gelieferten Bremsdrucks abgeschaltet werden, wobei dieser Wert insbesondere den Fall einer Notbremsung repräsentieren kann. Auf diese Weise stünde die Erfindung einer Ausnutzung des vollen im Kraftfahrzeug bzw. in der Fahrzeugkombination zur Verfügung stehenden Bremskraft- bzw. Bremsmomentenpotentiales nicht im Wege.

In vorteilhafter Weise können die Steuerelektronik oder Teile davon, soweit vorhanden, mit den Bremswertsensoren, den Temperatursensoren, den Druckregelventilen, dem Bremsgeber, den Druckmodulatoren, der Druckregeleinrichtung, ABS, ALB, verzögerungsabhängigen bzw. retardermomentabhängigen Bremskraftregler oder Teilen aller dieser Komponenten baulich oder elektrisch vereinigt sein.

In vorteilhafter Weise kann die Erfindung auch zur Überwachung des Bremsbelagverschleißes herangezogen werden. In einer Ausführungsform ist zu diesem Zweck in dem Bremsbelagträger oder dem Bremsbelag ein Abstandssensor angeordnet, der bei einer Bremsbetätigung seinen Abstand zur Bremstrommel oder Bremsscheibe mißt und ein diesem Abstand entsprechendes Ausgangssignal als Verschleißwertsignal der Steuerelektronik zuführt, wobei die Steuerelektronik so ausgebildet ist, daß sie dem Verschleißwertsignal entsprechende Ausgangssignale ausgibt und/oder Werte anzeigt. Der genannte Abstandssensor kann mit dem oder einem Temperatursensor baulich vereinigt sein.

In einer anderen Ausführungsform ist der oder ein Temperatursensor oder seine Zuleitung derart angeordnet, daß sein bzw. ihr der Bremstrommel oder Bremsscheibe nächster Punkt beim Eintritt eines höchstzulässigen Bremsbelagverschleißes mit der Bremstrommel bzw. der Bremsscheibe in Berührung kommt und dabei über diese einen elektrischen Anzeige- und/oder Warnkreis schließt.

In einer anderen Auführungsform wird der Zusammenhang zwischen Bremsbelagtemperatur bzw. Temperaturveränderung bei gegebenem Bremsdruck und Bremsbelagverschleiß zur Überwachung des letzteren ausgenutzt. In diesem Falle wird das Temperatursignal einer Auswerteeinrichtung zugeführt, die anhand eines Kennfelds derZuordnung von Temperatur bzw. Temperaturveränderung, Bremsdruck und Bremsbelagverschleiß ein Verschleißwertsignal abgibt und damit eine Verschleißwertanzeigeeinrichtung und/oder eine Verschleißwarneinrichtung steuert. In diesem Fall kann in dem Kennfeld auch die Abhängigkeit der genannten Größen von der Ausgangsgeschwindigkeit einer Bremsbetätigung berücksichtigt werden. Zu diesem Zweck werden der Auswerteeinrichtung auch geschwindigkeitsabhängige Signale zugeführt. Schließlich können die Temperatursensoren auch zur Überwachung der Radbremsen, insbesondere der Bremsbeläge oder der Bremsscheiben oder der Bremstrommein auf eine vorbestimmte Höchsttemperatur herangezogen werden. In diesem Falle wird mittels der Temperatursignale ein elektrischer Anzeige- und/oder Warnkreis gesteuert.

Die Erfindung wird nachstehend anhand von Ausführungsbeispielen die in den Zeichnungen dargestellt sind, erläutert.

Es zeigen
Fig. 1 eine Bremsanlage einer Fahrzeugkombination mit Bremsventil und druckmittelbetätigter Anhänger-Mitsteuerung,
Fig. 2 eine Bremsanlage einer Fahrzeugkombination mit elektrischer Bremssteuerung (EBS).

In den Figuren werden für gleiche Funktionen durchgehend gleiche Bezugszeichen verwendet. In den Figuren bedeuten ferner durchgehend gezeichnete Linien Druckmittelleitungen und strichpunktiert gezeichnete Linien elektrische Leitungen bzw. Verbindungen. Ferner werden in den Figuren als Fahrzeugseitenindizes "a" für die rechte, "b" für die linke Fahrzeugseite verwendet.

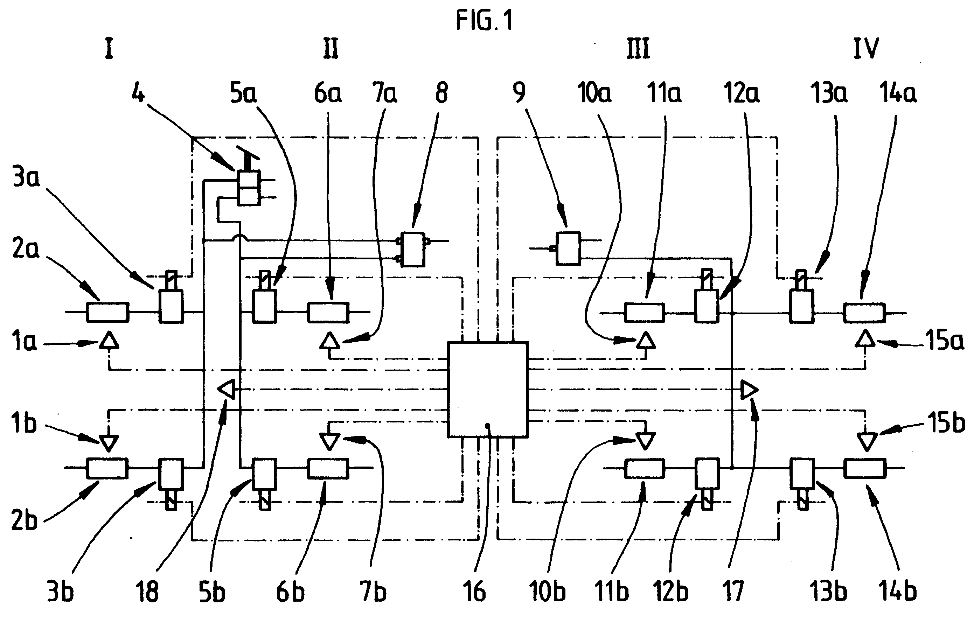

In Fig. 1 sind mit 2, 6, 11, 14 in Verbindung mit dem jeweiligen Fahrzeugseitenindex durch den jeweils zugeordneten druckmittelbeaufschlagbaren Bremszylinder angedeutete Radeinheiten bezeichnet, die ein oder mehrere Räder einschließlich ihrer Aufhängung als Tragelement und eine Trommel- oder Scheibenbremse einschließlich des oder der zugeordneten Bremszylinder(s) als Radbremse aufweisen.

Die jeweils mit der gleichen Ziffer bezeichneten, in bekannter Weise aufgebauten und deshalb nicht näher beschriebenen Radeinheiten bilden Achsen I, II, 111, IV, wobei die Achsen I bzw. 11 eine Vorderachse bzw. eine Hinterachse eines Kraftfahrzeugs und die Achsen 111 bzw. IV eine Vorderachse bzw. eine Hinterachse eines Anhängers sind. Insgesamt gesehen stellen die Achsen 1 bis IV die Achsen einer Fahrzeugkombination dar, wobei I und/oder 11 als deren Vorderachse(n) und 111 und/oder IV als deren Hinterachse(n) anzusehen sind.

Den Radbremsen der Achsen I bzw. 11 bzw. III bzw. IV sind Sensoreinrichtungen 1 bzw. 7 bzw. 10 bzw. 15 mit dem jeweiligen Fahrzeugseitenindex zugeordnet. Die einzelne Sensoreinrichtung kann als Bremswertsensoreinrichtung die bei einer Bremsbetätigung von der jeweils zugeordneten Radbremse erzeugte Bremskraft bzw. deren Bremsmoment erfassen, in welchem Falle sie Bremswertsignale abgibt. In einer anderen Ausgestaltung kann die einzelne Sensoreinrichtung als Temperatursensoreinrichtung, die bei oder nach der Bremsbetätigung entstehende bzw. entstandene Temperatur der zugeordneten Radbremse (Radbremstemperatur) erfassen, in welchem Falle sie Temperatursignale abgibt. Hinsichtlich der Einzelheiten der Ausbildung als Bremswertsensoreinrichtung bzw. Temperatursensoreinrichtung wird auf die weiter vorn gemachten Ausführungen verwiesen. Die einzelne Sensoreinrichtung kann aber auch als kombinierte Bremswert- und/oder Temperatursensoreinrichtung ausgebildet sein.

Ein Bremsventil 4, ein Anhängersteuerventil 8 und ein Anhängerbremsventil 9 bilden eine Bremsauslöseeinrichtung 4, 8, 9, die es dem Fahrzeugführer gestattet, einen von der Betätigungskraft bzw. dem Betätigungsweg eines Stellglieds des Bremsventils 4 abhängigen Bremsdruck aus nicht dargestellten Druckquellen zu den Radbremsen auszusteuern. Die vorstehend erwähnten Ventile bestehen aus bekannten Bauarten und sind desahlb hier nicht näher beschrieben. das Bremsventil 4 ist zweikreisig ausgebildet und liefert in bekannter Weise zu den jeweils als eigener Kreis zusammengefaßten Radbremsen der Achse I und der Achse II das Bremsdruckmittel auf getrennten Leitungswegen. Das Anhängersteuerventil 8 ist in bekannter Weise ebenfalls zweikreisig, d.h. von jedem der vorstehend erwähnten Kreise getrennt ansteuerbar.

In Druckmittelleitungen von dem Bremsventil 4 bzw. dem Anhängerbremsventil 9 zu den einzelnen Radbremsen ist jeweils ein als Sperr- und Entlüftungsventil ausgebildetes, elektrisch steuerbares Druckregelventil, im folgenden ABS-Ventil genannt, angeordnet. Diese tragen, jeweils mit dem entsprechenden Fahrzeugseitenindex, für die Achse 1 das Bezugszeichen 3 und für die Achsen II bzw. III bzw. IV in entsprechender Weise das Bezugszeichen 5 bzw. 12 bzw. 13. Jedes ABS-Ventil ist durch entsprechende Aktivierung seines bzw. seiner Magneten in eine Durchgangsstellung oder eine Sperrstellung oder eine Druckabbaustellung stellbar. In der Durchgangsstellung sind Anströmung und Abströmung des ABS-Ventils miteinanderverbunden. In der SperrsteIlung ist die Verbindung zwischen Anströmung und Abströmung gesperrt. In der Druckabbaustellung ist die Verbindung zwischen Anströmung und Abströmung ebenfalls gesperrt und zusätzlich die Abströmung mit einem Druckentlastungsanschluß, d.h. im Falle einer pneumatischen Bremsanlage mit der Atmosphäre, verbunden.

Die Druckregelventile sind abströmseitig mit der jeweils zugeordneten Radbremse (genau: dem betreffenden Bremszylinder) verbunden. Anströmseitig sind die ABS-Ventile in aus der Darstellung erkennbarer Weise mit dem Bremsventil 4 bzw. dem Anhängerbremsventil 9 verbunden.

Mit 16 ist eine Steuerelektronik bezeichnet. Die Steuerelektronik 16 weist in nicht dargestellter Weise eine Vergleichs- und Regeleinrichtung sowie eine Blockierschutzelektronik auf, welch letztere zusammen mit nicht dargestellten Radschlupfsensoren eine Antiblockiereinrichtung (ABS) bildet. Die Magnete der Druckregelventile sind, wie aus der Darstellung ersichtlich, mit der Steuerelektronik 16 getrenntverbunden und von dieser getrennt aktivierbar.

Die Bremswert- und/oder Temperatursignale der Sensoreinrichtungen 1, 7, 10, 15 werden der Vergleichs- und Regeleinrichtung der Steuerelektronik 16 zugeführt.

Der Fahrzeugführer löst eine Betätigung der dargestellten Bremsanlage durch eine Kraft auf das bzw. durch eine Verschiebung des Stellorgan(s) des Bremsventils 4 aus. Dabei baut sich in den Zuströmungen der ABS-Ventile 3 und 5 von der Betätigungskraft bzw. dem Betätigungsweg abhängiger Bremsdruck auf. Mittels dieses Bremsdrucks wird über das Anhängersteuerventil auch das Anhängerbremsventil 9 betätigt, wodurch auch dieses (indirekt) von der Betätigungskraft bzw. dem Betätigungsweg des Stellglieds des Bremsventils 4 abhängigen Bremsdruck in die Zuströmungen der ABS-Ventile 12 und 13 aussteuert. Die ABS-Ventile befinden sich bei Beginn der Bremsbetätigung in Durchgangsstellung. Dadurch kann zunächst dervolle von dem Bremsventil 4 bzw. dem Anhängerbremsventil 9 gelieferte Bremsdruck die Radbremsen beaufschlagen.

Die Sensoreinrichtungen 1 bzw. 7 bzw. 10 bzw. 15 sensieren je nach ihrer Ausbildung bei der Bremsbetätigung den von der zugeordneten Radbremse erzeugten Bremswert oder die in der Radbremse entstehende Temperatur und geben entsprechende Bremswert- und/oder Temperatursignale an die Vergleichs- und Regeleinrichtung der Steuerelektronik 16 aus. Die Vergleichs- und Regeleinrichtung vergleicht nach eingespeicherten Programmen die Signale verschiedener Sensoreinrichtungen miteinander und bildet daraus einen Sollwert für die Steuerung der ABS-Ventile. Sind die verglichenen Signale unterschiedlich stark, so steuert die Vergleichs- und Regeleinrichtung das der Radbremse mit dem stärkeren Signal (Bremswert- und/oder temperaturmäßig voreilende Radbremse) zugeordnete ABS-Ventil aus der Durchgangsstellung in die Sperrstellung bzw. die Druckabbaustellung, bis der festgestellte Stärkeunterschied der Signale auf Null oder einen vorbestimmten (zulässigen) Grenzwert abgebaut ist. Der Stärkenunterschied Null bzw. der Grenzwert bilden dabei den Sollwert der Regelung. Auf diese Weise werden die Bremswerte, d.h. die von dem in den Vergleich einbezogenen Radbremsen erzeugten Bremskräfte bzw. Bremsmomente und/oder die in diesen Radbremsen entstehenden Temperaturen angeglichen. Im Ergebnis werden dadurch auf ungleichmäßige Bremswirkungen zurückzuführende Erscheinungen vermieden bzw. gemindert. Insbesondere lassen sich eine bessere Richtungsstabilität beim Bremsen durch Vermeidung von Giermomenten, eine gleichmäßige Beanspruchung der Radbremsen sowie ein gleichmäßiger Verschleiß der Radbremsen, insbesondere der Bremsbeläge, erzielen.

In einer Ausführungsform vergleicht die Vergleichs- und Regeleinrichtung die von den Sensoreinrichtungen einer Achse gelieferten Signale und löst gegebenenfalls den vorstehend beschriebenen Steuervorgang aus. Dadurch werden beispielsweise an den Radbremsen der Achse I untereinander gleichmäßige Bremswerte bzw. Radbremstemperaturen erzielt. Entsprechendes gilt für die Radbremsen der Achsen 11 bzw. 111 bzw. IV untereinander. Damit werden in erster Linie Giermomente vermieden und damit die Richtungsstabilität der Einzelfahrzeuge bzw. der Fahrzeugkombination bei der Bremsbetätigung verbessert. Gleichzeitig wird eine gleichmäßige Radbremsbeanspruchung sowie eine gleichmäßige Abnutzung der Radbremsen, insbesondere des Bremsbelagverschleißes erzielt. In dieser Ausführungsform können die Radbremsen in bekannter Weise zusätzlich achsweise auch lastabhängig gesteuert sein.

In einer anderen Ausführungsform werden in der Vergleichs- und Regeleinrichtung die Signale von Sensoreinrichtungen von verschiedenen Achsen miteinander verglichen. Dadurch wird eine achsweise Angleichung der Bremswerte bzw. der Radbremstemperaturen erzielt.

In einer anderen Ausgestaltung werden die Signale einer oder mehrerer Sensoreinrichtungen des Kraftfahrzeugs mit Signalen einer oder mehreren Sensoreinrichtungen des Anhängers verglichen. Dadurch werden die Bremskräfte und/oder Radbremstemperaturen der Einzelfahrzeuge der Fahrzeugkombination aneinander angeglichen.

In einer anderen Ausgestaltung können die Signale einer oder der Sensoreinrichtungen einer Achse des Kraftfahrzeugs mit den Signalen einer oder der Sensoreinrichtungen einer Achse des Anhängers verglichen werden. Dadurch läßt sich eine Angleichung der Bremswerte und/oder der Radbremstemperaturen zwischen einzelnen Achsen der die Fahrzeugkombination bildenden Einzelfahrzeuge herbeiführen.

Die Fig. 1 zeigt außer den bereits erwähnten Einrichtungen noch durch 17 bzw. 18 symbolisierte Lastsensoren, welche den Auslastungsgrad der Achsen bzw. 11 bzw. 111 bzw. IV im Vergleich zu einer Bezugsauslastung, etwa Vollast oder Leerlast, erfassen.

Diese Lastsensoren ermöglichen die Fortbildung des Ausführungsbeispiels nach Fig. 1 zu weiteren vorteilhaften Ausführungsformen. Die Vergleichs-und Regeleinrichtung kann bei Vorhandensein dieser Lastsensoren derart ausgebildet sein, daß sie die von den Sensoreinrichtungen gelieferten Signale nicht nur untereinander zu vergleichen vermag, sondern auch mit von dem Auslastungsgrad der Achsen abhängigen Vorgabewerten. Auf diese Weise ermöglicht die Erfindung eine lastabhängige Regelung der den Radbremsen zugeführten Bremsdrücke.

Die in der Steuerelektronik 16 enthaltene Antiblockiereinrichtung wirkt für die dargestellten elektrischen Verbindungen ebenfalls auf die Magnete der ABS-Ventile und steuert die Ventile damit radschlupfabhängig. Die ABS weist gegenüber der Vergleichs-und Regeleinrichtung eine Vorrangschaltung auf. Dadurch ist sichergestellt, daß eine Regel phase derABS durch die Erfindung nicht berührt wird.

Die Vergleichs- und Regeleinrichtung ist darüber hinaus so ausgebildet, daß sie sich abschaltet, wenn der in die Zuströmungen der ABS-Ventile ausgesteuerte Bremsdruck einen vorbestimmten Wert überschreitet. Dieser Bremsdruck ist vorzugsweise so gewählt, daß der den Fall einer Notbremsbetätigung signalisiert. Auf diese Weise ist sichergestellt, daß im Notfalle durch die Erfindung keine Bremskraftverluste hervorgerufen werden.

Sind in weiter vorn erwähnter Weise die Radbremsen achsweise lastabhängig gesteuert, so kann die Vergleichs- und Regeleinrichtung der Steuerelektronik 16 gegenüber dieser Steuerung (ALB) eine Vorrangschaltung aufweisen. Diese Vorrangschaltung läßt sich auch in bestimmten Einsatzfällen vorteilhaft durch einen ALB mit Knickkennung ersetzen. Durch diese Vorrangschaltung würde bis zur Aussteuerung eines vorbestimmten Bremsdruckes durch das Bremsventil 4 bzw. das Anhängerbremsventil 9 die Erfindung wirksam sein und bei Erreichen dieses vorbestimmten Bremsdruckes die Steuerelektronik 16 die Vergleichs- und Regeleinrichtung abschalten, woraufhin an den ALB-geregelten Achsen nur noch in beschriebener Weise die Angleichung der Radbremsen der jeweiligen Achse untereinander möglich ist.

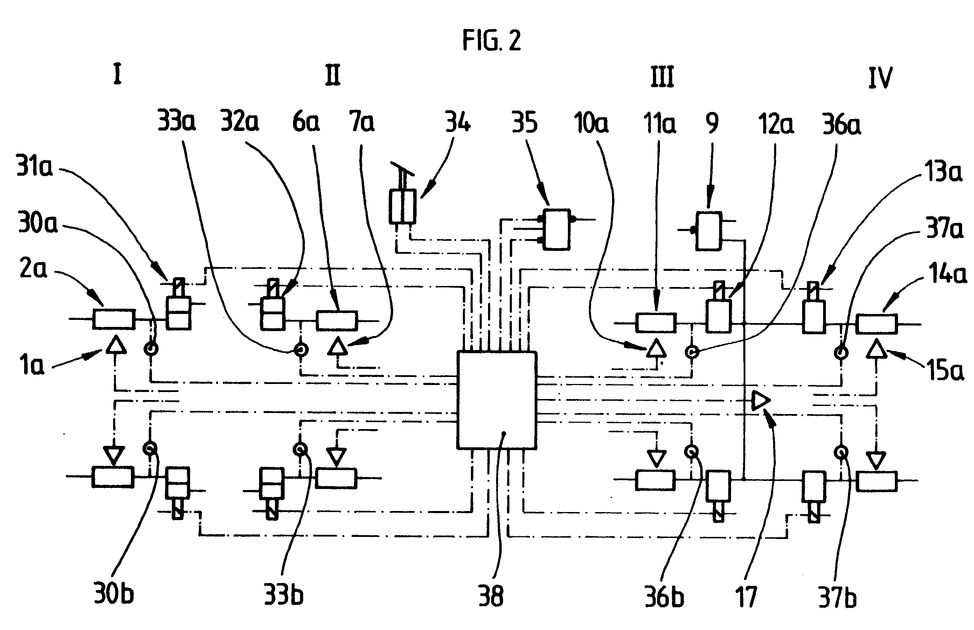

Fig. 2 zeigt eine Bremsanlage einer Fahrzeugkombination, die wie das vorige Ausführungsbeispiel den Achsen 1 bis IV zugeordnete, durch jeweils einen Bremszylinder symbolisierte Radeinheiten 2, 6, 11, 14 aufweist, denen jeweils eine Sensoreinrichtung 1, 7, 10, 15 zugeordnet ist.

Der wieder durch die Achsen 111 und IV symbolisierte Anhänger weist wie im vorigen Ausführungsbeispiel das Anhängerbremsventil 9 und jeweils einer Radbremse zugeordnete ABS-Ventile 12 bzw. 13 auf.

Der Einfachheit halber sind in der Fig. 2 die aus Fig. 1 bekannten Einrichtungen nur für die rechte Fahrzeugseite mit Bezugszeichen versehen. Ebenfalls zur Vereinfachung sind die von den Sensoreinrichtungen 1, 7, 10, 15 ausgehenden elektrischen Leitungen nur angedeutet.

Die Bremsauslöseeinrichtung ist in diesem Ausführungsbeispiel als elektrische Bremsdrucksteuerung (EBS) ausgebildet. Sie besteht aus einem Bremsgeber 34, jeweils einer Radbremse des Kraftfahrzeugs zugeordneten, als Kombi-Druckmodulatoren 31 bzw. 32 ausgebildeten, Druckmodulatoren, einem Anhängersteuerventil 35 und dem Anhängerbremsventil 9.

Der Bremsgeber liefert ein elektrisches Ausgangssignal (Bremssignal), welches von der auf sein Stellglied ausgeübten Betätigungskraft oder von dem Betätigungsweg des Stellglieds abhängig ist.

Jeder der bereits erwähnten, jeweils einer Radbremse der Achsen I bzw. 11, also des Kraftfahrzeugs, zugeordneten und magnetbetätigten Kombi-Druckmodulatoren 31 bzw. 32 vereinigt in sich die Funktion eines Druckmodulators und des Druckregelventils. Als Druckmodulator steuert er aus einer oder mehreren nicht dargestellten Druckmittelquellen einen Bremsdruck aus, dessen Höhe von der Stärke des seinen oder seine Magnete aktivierenden Bremssignals abhängt. Als Druckregelventil übt er die Funktionen des im vorigen Ausführungsbeispiel näher beschriebenen ABS-Ventils aus. Der Kombi-Druckmodulator kann konstruktiv als Druckmodulator mit im gleichen Gehäuse angeordneten nachgeschalteten ABS-Ventil oder mit voll integrierten Funktionen ausgebildet sein. Es liegt auf der Hand, daß anstelle eines Kombi-Druckmodulators auch ein Druckmodulator und ein nachgeschaltetes getrenntes ABS-Ventil eingesetzt werden können.

Die Kombi-Druckmodulatoren 31 bzw. 32 sind achsweise anströmseitig mit unterschiedlichen Druckquellen verbunden. Der Bremsgeber 34 weist zwei elektrische Kreise auf. Der oder die Magnete jedes Kombi-Druckmodulators 31 bzw. 32 können von jedem dieser elektrischen Kreise angesteuert werden, so daß die Bremsanlage des Kraftfahrzeugs zwei elektrische Steuerkreise und zwei Druckmittelkreise aufweist.

Zur Bremsauslöseeinrichtung gehört weiter das in diesem Fall mit 35 bezeichnete Anhängersteuerventil, das von den Bremssignalen beider Kreise des Bremsgebers 34 elektrisch angesteuert wird. Das Anhängersteuerventil 35 wirkt, wie im vorigen Ausführungsbeispiel beschrieben, mit dem Anhängerbremsventil 9 zusammen.

Der an der Abströmseite jedes Kombi-Druckmodulators 31 bzw. 32 im Kraftfahrzeug bzw. jedes ABS-Ventil 12 bzw. 13 im Anhänger zu der zugeordneten Radbremse ausgesteuerte Bremsdruck wird bei diesem Ausführungsbeispiel jeweils durch einen Drucksensor 30 bzw. 33 bzw. 36 bzw. 37 überwacht, deren bremsdruckabhängige Ausgangssignale als Bremsdrucksignale der in diesem Fall mit 38 bezeichneten Steuerelektronik zugeführt werden, von der sie außer im Sinne der Erfindung auch zu anderen, nicht näher erläuterten Zwecken ausgewertet werden können.

Auch die Bremssignale des Bremsgebers 34 und die Bremswert- und/oder Temperatursignale der nur angedeutet dargestellten Sensoreinrichtungen 1 bzw. 7 bzw. 10 bzw. 15 werden der Steuerelektronik 38 zugeführt. Ausgangsseitig ist die Steuerelektronik 38 über jeweils eine eigene elektrische Verbindung mit dem oder den Magneten der Kombi-Modulatoren 31 bzw. 32 und der ABS-Ventile 12 bzw. 13 verbunden.

Die Steuerelektronik 38 ist in nicht näher beschriebener Weise derart ausgebildet, daß sie aus den bei oder nach einer oder mehreren früheren Bremsbetätigungen festgestellten Unterschieden zweier Sensoreinrichtungen oder einer Sensoreinrichtung gegenüber einem lastabhängigen Vorgabewert einen Bremsdruckkorrekturwert als Sollwert für den der jeweiligen Radbremse zuzuführenden Bremsdruck errechnet und speichert.

Als Bremsdruckkorrekturwert kommen je nach den spezifischen Eigenschaften des Kraftfahrzeugs und/oderdes Anhängers und/oderder Kraftfahrzeugkombination eine Differenz oder ein Quotient der in Frage kommenden Bremsdrücke in Betracht. Falls diese spezifischen Eigenschaften derart sind, daß der Bremsdruckkorrekturwert variabel sein muß, beispielsweise abhängig vom Bremssignal des Bremsgebers 34, ist die Steuerelektronik 38 so ausgebildet, daß sie ein Kennfeld des Bremsdruckkorrekturwertes errechnet und speichert.

Betätigt der Fahrzeugführer den Bremsgeber 34, so werden durch dessen Bremssignale über die Steuerelektronik 38, in der sie aufbereitet werden und nach weiter unten bebeschriebenen Kriterien angepaßt werden können, die Magnete der Kombi-Druckmodulatoren 31 bzw. 32 aktiviert. Dadurch steuern die Kombi-Druckmodulatoren 31 bzw. 32 einen Bremsdruck zu der jeweils zugeordneten Radbremse aus. Der sich in dem jeweiligen Bremszylinder aufbauende Bremsdruck wird durch den zugeordneten Drucksensor 30 bzw. 33 sensiert und in Form eines Bremsdrucksignals an die Steuerelektronik 38 gemeldet. Anhand des eingespeicherten Bremsdruckkorrekturwertes und der Bremsdruckrückmeldung überwacht die Steuerelektronik 38, daß sich die Bremsdrücke in miteinander verglichenen Radbremsen bzw. in mit dem lastabhängigen Vorgabewert verglichenen Radbremsen nach Maßgabe des Bremsdruckkorrekturwertes zueinander bzw. zu dem Vorgabewert verhalten.

In einer bereits erwähnten Ausführungsform kann sich der Bremsdruckkorrekturwert auf die Bremsdrücke der linken bzw. der rechten Fahrzeugseite einer Achse, etwa der Radbremse 2a und der nicht dargestellten Radbremse 2b, beziehen. Stellt die Steuerelektronik 38 fest, daß sich die Bremsdrücke nicht nach Maßgabe des Bremsdruckkorrekturwertes verhalten, so steuert sie einen der oder die der Achse zugeordneten Kombi-Druckmodulatoren im Sinne einer Herstellung dieses Verhaltens. Dabei tritt die ABS-Ventilfunktion des Kombi-Druckmodulators in Aktion.

Auf die beschriebene Weise werden, kurz gesagt, die von den verglichenen Radbremsen erzeugten Bremswerte bzw. die darin entstandenen Radbremstemperaturen nach bei früheren Bremsbetätigungen gewonnenen Erfahren angeglichen. Diese Methode ist besonders für die Angleichung der Temperaturen geeignet, da sich diese infolge derträgheitsbehafteten Messung und der instationären Temperaturentwicklung innerhalb einer Bremsbetätigung schwer durchführen läßt. Eine weitere Vereinfachung der Temperaturerfassung und Angleichung ergibt sich, wenn diese nicht während einer Bremsbetätigung, sondern um einen vorbestimmten Zeitraum nach derselben erfolgt.

Es liegt auf der Hand, daß in der beschriebenen Weise die Wirkungen der Radbremsen auf beiden Seiten dergleichen Achse an sämtlichen Achsen angleichbar sind. Es lassen sich aber auch die Bremswerte und Radbremstemperaturen von Radbremsen an verschiedenen Achsen nicht nur innerhalb des Kraftfahrzeugs und/oder innerhalb des Anhängers, sondern auch innerhalb der Fahrzeugkombination als Ganzes gesehen angleichen und/oder hinsichtlich ihrer Beanspruchung, insbesondere des Belagverschleißes, optimieren. Die vorstehend erwähnte Angleichung ist immer dann ausgeschlossen, wenn die Achsen und/oder die einzelnen Fahrzeuge der Fahrzeugkombination unterschiedlich ausgelastet sind. In diesem Falle werden nicht Bremswert- und/oder Temperatursignale mit den Werten anderer Radbremsen oder Achsen, sondern mit einem aus einem in der Steuerelektronik 38 vorgegebenen Kennfeld gewonnenen Vorgabewert verglichen. Durch den Vergleich mit dem Vorgabewert und entsprechende Steuerung der Kombi-Druckmodulatoren 31 bzw. 33 und/oder ABS-Ventile 12 bzw. 13 läßt sich eine den Auslastungen der Achsen bzw. Einzelfahrzeuge der Fahrzeugkombination angepaßte Bremsdruckverteilung erzielen.

Der Bremsdruckkorrekturwert kann also einerseits eine bremswert- und/oder temperaturmäßige Angleichung und andererseits eine lastabhängige Anpassung der Bremswerte und/oder Temperaturen der den Sensoreinrichtungen zugeordneten Radbremsen zum Ziel haben. Auch eine Kombination beider Zielsetzungen ist möglich, etwa in der Form gleichzeitiger Angleichung der Radbremsen von zwei Fahrzeugseiten einerAchse und tastabhängiger Anpassung derso untereinander angeglichenen Radbremsen an (ebenfalls untereinander angeglichene) Radbremsen einer anderen Achse.

Zum Zwecke der lastabhängigen Anpassung weist der Anhänger wieder den Lastsensor 17 auf, während die Lastwerte des Kraftfahrzeugs von nicht dargestellten Lastsensoren eines ALB erfaßt werden.

Die Steuerelektronik 38 enthält in nicht dargestellter Weise noch den ALB, dessen Meßwertaufnehmerdie bereits erwähnten Lastsensoren im Kraftfahrzeug und der Lastsensor 17 im Anhänger sind. Ferner enthält die Steuerelektronik 38 in nicht dargestellter Weise und in Verbindung mit ebenfalls nicht dargestellten weiteren Meßwertaufnehmern eine ABS, eine radschlupfabhängige Vortriebsregelung und einen retardermomentabhängigen Bremskraftregler sowie eine Retardersteuerung.

Im übrigen gelten die beim Ausführungsbeispiel nach Fig. 1 und weiter vorn gemachten Ausführungen auch für dieses Ausführungsbeispiel in entsprechender Weise. Entsprechend gelten die in diesem Ausführungsbeispiel gemachten Ausführungen fürdasjenige nach Figur 1.

Für beide Ausführungsbeispiele gelten folgende gemeinsamen Bemerkungen.

Die Erfindung ist auch ohne die in den Figurenbeschreibungen erwähnten Zusatzeinrichtungen ausführbar.

Die Erfindung kann auch nur bei einzelnen Achsen einer Fahrzeugkombination oder ihrer Bestandteile angewandt werden.

Die Erfindung ist außer in den dargestellten Betriebsbremsanlagen auch in Hilfsbrems- und Festellbremsanlagen entsprechend einsetzbar.

Es liegt auf der Hand, daß diejenigen weiter vorn gemachten Ausführungen, die in den vorstehenden Figurenbeschreibungen nicht erwähnt wurden, fürdie dargestellten Ausführungsbeispiele in entsprechender Weise gelten.

Schließlich ist für den Fachmann offenkundig, daß in den vorstehenden Ausführungen der Anwendungsbereich der Erfindung nicht erschöpfend beschrieben ist. Insbesondere gelten alle Erläuterungen für ein Kraftfahrzeug oder einen Anhänger als Einzelfahrzeuge in entsprechender Weise.

Sofern die Fahrzeugkombination oder ihre Bestandteile mehr Achsen oder mehr Radbremsen pro Achse als dargestellt haben, gelten die vorstehenden Ausführungen für diese entsprechend.

## Patentansprüche

1. Bremsdruckregeleinrichtung für ein Kraftfahrzeug oder einen Anhänger oder eine Fahrzeugkombination mit dem Kraftfahrzeug und dem Anhänger als Bestandteilen, dessen bzw. deren Bremsanlage druckmittelbetätigte Radbremsen aufweist, deren Bremsdrücke wenigstens über eine willkürlich betätigbare Bremsauslöseeinrichtung gesteuert werden, mit den Merkmalen:
a) es sind zusätzlich wenigstens zwei elektrisch steuerbare Druckregelventile (3a, 3b, 5a, 5b, 12a, 12b, 13a, 13b, 31a, 32a) vorgesehen, die jeweils wenigstens einer Randbremse des Kraftfahrzeugs und/oder des Anhängers und/oder der Fahrzeugkombination zugeordnet sind;
b) die Bremsauslöseeinrichtung (4, 8, 9; 34, 31a, 32a, 35, 38, 9) ist den Druckregelventilen ansteuerseitig bzw. anströmseitig vorgschaltet;
c) den jeweils einem Druckregelventil (3a, 3b, 5a, 5b, 12a, 12b, 13a, 13b, 31a, 32a) zugeordneten Radbremsen ist eine Sensoreinrichtung (1a, 1b, 7a, 7b, 10a, 10b, 15a, 15b) zugeordnet;
d) es ist eine Steuerelektronik (16, 38) vorgesehen, die Ausgangssignale der Sensoreneinrichtungen zu Steuersignalen für die Druckregelventile (3a, 3b, 5a, 5b, 12a, 12b, 13a, 13b, 31a, 32a) verarbeitet,
gekennzeichnet durch die Merkmale:
e) die Sensoreinrichtungen bestehen aus Bremswertsensoreinrichtungen (1a, 1b, 7a, 7b, 10a, 10b, 15a, 15b) zur Erfassung der Bremskraft bzw. des Bremsmomentes, im folgenden mit dem Sammelbegriff Bremswert bezeichnet;
f) die Steuerelektronik (16, 38) ist so ausgebildet, daß ihre Steuersignale die wenigstens zwei Druckregelventile (3a, 3b, 5a, 5b, 12a, 12b, 13a, 13b, 31a, 32a) derart in Abhängigkeit von der Differenz der Ausgangssignale der zugeordneten Bremswertsensoreinrichtungen steuern, daß die Ausganssignale der zugeordneten Bremswertsensoreinrichtungen (1a, 1 b, 7a, 7b, 10a, 10b, 15a, 15b) im wesentlichen um einen Sollwert voneinander abweichen.

2. Bremsdruckregeleinrichtung für ein Kraftfahrzeug oder einen Anhänger oder eine Fahrzeugkombination mit dem Kraftfahrzeug und dem Anhänger als Bestandteilen, dessen bzw. deren Bremsanlage druckmittelbetätigte Radbremsen aufweist, deren Bremsdrücke wenigstens über eine willkürlich betätigbare Bremsauslöseeinrichtung gesteuert werden, mit den Merkmalen:
a) es sind zusätzlich wenigstens zwei elektrisch steuerbare Druckregelventile (3a, 3b, 5a, 5b, 12a, 12b, 13a, 13b, 31a, 32a) vorgesehen, die jeweils weinigstens einer Radbremse des Kraftfahrzeugs und/oder des Anhängers und/oder der Fahrzeugkombination zugeordnet sind;
b) die Bremsauslöseeinrichtung (4, 8, 9; 34, 31a, 32a, 35, 38, 9) ist den Druckregelventilen ansteuerseitig bzw. anströmseitig vorgeschaltet;
c) den jeweils einem Druckregelventil (3a, 3b, 5a, 5b, 12a, 12b, 13a, 13b, 31a, 32a) zugeordneten Radbremsen ist eine Sensoreinrichtung (1a, 1b, 7a, 7b, 10a, 10b, 15a, 15b) zugeordnet;
d) es ist eine Steuerelektronik (16, 38) vorgesehen, die Ausgangssignale der Sensoreinrichtungen zu Steuersignalen für die Druckregelventile (3a, 3b, 5a, 5b, 12a, 12b, 13a, 13b, 31 a, 32a) verarbeitet,
gekennzeichnet durch die Merkmale:
die Sensoreinrichtungen bestehen aus Temperatursensoreinrichtungen (1a, 1b, 7a, 7b, 10a, 10a, 10b, 15a, 15b) zur Erfassung der Radbremstemperatur;
f) die Steuerelektronik (16, 38) ist so ausgebildet, daß ihre Steuersignale die wenigstens zwei Druckregelventile (3a, 3b, 5a, 5b, 12a, 12b, 13a, 13b, 31a, 32a) derart in Abhängigkeit von der Differenz der Ausgangssignale der zugeordneten Temperatursensoreinrichtungen steuern, daß die Ausgangssignale der zugeordneten Temperatursensoreinrichtungen (1a, 1b, 7a, 7b, 10a, 10b, 15a, 15b) im wesentlichen um einen Sollwert voneinander abweichen.

3. Bremsdruckregeleinrichtung nach Anspruch 1, gekennzeichnet durch das Merkmal:
die Bremswertsensoreinrichtung ist derart ausgebildet, daß sie durch die Bremskraft bzw. das Bremsmoment hervorgerufene Bauteilverformungen erfaßt und verformungsgradabhängige Ausgangssignale liefert.

4. Bremsdruckregeleinrichtung nach Anspruch 2, dadurch gekennzeichnet, daß die Radbremsen in an sich bekannter Weise als Trommel- oder Scheibenbremsen ausgebildet sind und die Temperatursensoreinrichtung in dem Bremsbelagträger und/oder dem Bremsbelag und/oder der Trommel/Scheibe angeordnet ist und die Bremsbelag- oder Bremsbelagträgertemperatur mißt.

5. Bremsdruckregeleinrichtung nach Anspruch 4, dadurch gekennzeichnet, daß die Temperatursensoreinrichtung aus einer Mehrzahl von auf dem Umfang und/oder der Breite von Bremsbelagträger und/oder Bremsbelag verteilt angeordneten Temperatursensoren besteht und daß das Temperatursignal dem arithmetischen oder gewichteten Mittelwert der Signale der einzelnen Temperatursensoren entspricht.

6. Bremsdruckregeleinrichtung nach einem der vorhergehenden Ansprüche, dadurch gekennzeichnet, daß das Druckregelventil als Sperr- und Entlüftungsventil mit einer Durchgangsstellung, einer Sperrstellung und einer Druckabbaustellung ausgebildet ist.

7. Bremsdruckregeleinrichtung nach Anspruch 6, gekennzeichnet durch folgende Merkmale:
die Steuerelektronik (16) ist als Vergleichs- und Regeleinrichtung ausgebildet, welche die von den Bremswertsensoreinrichtungen bzw. den Temperatursensoreinrichtungen zugeführten Ausgangssignale untereinander oder mit einem, gegebenenfalls aus einem Kennfeld gewonnenen lastabhängigen Vorgabewert, der die unterschiedlichen Auslastungsgrade der Achsen oder der Bestandteile der Fahrzeugkombination berücksichtigt, vergleicht und das den Radbremsen mit dem gegenüber den anderen sensierten Radbremsen bzw. dem Vorgabewert stärkeren Signal zugeordnete Sperr- und Entlüftungsventil im wesentlichen bis zum Abbau der Abweichung auf Null oder einen vorbestimmten Grenzwert aus der Durchgangsstellung in die Sperr- bzw. die Druckabbaustellung steuert, wobei gegebenenfalls der Steuerelektronik zusätzlich die genannten Auslastungsgrade kennzeichnende Lastsignale zugeführt werden.

8. Bremsdruckregeleinrichtung nach einem der Ansprüche 1 bis 6,
gekennzeichnet durch folgende Merkmale:
a) den jeweils einem Druckregelventil zugeordneten Radbremsen ist ein Drucksensor zugeordnet (30a, 30b, 33a, 33b, 36a, 36b, 37a, 37b), der den zu diesen Radbremsen gelieferten Bremsdruck erfaßt und dessen bremsdruckabhängiges Ausgangssignal als Bremsdrucksignal der Steuerelektronik (38) zugeführt wird;
b) die Steuerelektronik (38) ist derart ausgebildet, daß sie aus den bei oder nach einer oder mehreren früheren Bremsbetätigungen zugeführten Bremswert- bzw. Temperatursignalen, gegebenenfalls unter Berücksichtigung des relativen Auslastungsgrads der den sensierten Radbremsen zugeordneten Achsen bzw. Bestandteile der Fahrzeugkombination als Sollwert einen Bremsdruckkorrekturwert bzw. dessen Kennfeld, insbesondere einen Sollwert oder ein Sollwertkennfeld für die Differenz oder den Quotienten der den Radbremsen zugeführten Bremsdrücke, errechnet und speichert und bei einer Bremsbetätigung die Bremsdrücke nach dem jeweiligen Bremsdruckkorrekturwert durch Steuerung der Druckregelventile regelt, wobei gegebenenfalls der Steuerelektronik zusätzlich die genannten Auslastungsgrade kennzeichnende Lastsignale zugeführt werden.

9. Bremsdruckregeleinrichtung nach Anspruch 8, gekennzeichnet durch das Merkmal:
die Steuerelektronik (38) ist derart ausgebildet, daß sie den Bremsdruckkorrekturwert bzw. sein Kennfeld anhand der bei oder nach der Bremsbetätigung zugeführten Bremswert- und/oder Temperatursignale aktualisiert.

10. Bremsdruckregeleinrichtung nach einem der vorhergehenden Ansprüche, dadurch gekennzeichnet, daß die Bremsanlage der Fahrzeugkombination bzw. wenigstens eines ihrer Bestandteile eine Antiblockiereinrichtung (ABS) aufweist, von der die Druckregelventile bzw. die Druckregelventile des betreffenden Bestandteils mit Vorrang steuerbar sind.

11. Bremsdruckregeleinrichtung nach einem der vorhergehenden Ansprüche,
gekennzeichnet durch folgendes Merkmal:
die Steuerelektronik (16, 38) ist derart ausgebildet, daß sie oberhalb eines vorbestimmten Wertes der Betätigungskraft oder des Betätigungsweges bzw. des Bremssteuerdruckes der Bremsauslöseeinrichtung oder des von dieser ausgesteuerten Bremsdruckes bzw. Bremssteuerdrucks, der insbesondere den Fall einer Notbremsung repräsentiert, abgeschaltet wird.

## Claims

1. A brake pressure regulating arrangement for a motor vehicle or a trailer or a vehicle combination with the motor vehicle and the trailer as components, the brake system of which motor vehicle or trailer has pressure medium-operated wheel brakes, the brake pressures of which are controlled at least by way of a driver-operable brake application device, having the following features:
a) there are provided additionally at least two electrically controllable pressure control valves (3a, 3b, 5a, 5b, 12a, 12b, 13a, 13b, 31a, 32a) which are associated in each case with at least one wheel brake of the motor vehicle and/or of the trailer and/or of the vehicle combination;
b) the brake application device (4, 8, 9; 34, 31 a, 32a, 35, 38, 9) is connected in series on the inlet side or outlet side of the pressure control valves;
c) a sensor device (1a, 1b, 7a, 7b, 10a, 10b, 15a, 15b) is associated with the wheel brakes associated in each case with a pressure control valve (3a, 3b, 5a, 5b, 12a, 12b, 13a, 13b, 31a, 32a);
d) control electronics (16, 38) are provided, which process output signals of sensor devices to control signals for the pressure control valves (3a, 3b, 5a, 5b, 12a, 12b, 13a, 13b, 31a, 32a),
characterized by the following features:
e) the sensor devices consists of braking value-sensing devices (1a, 1b, 7a, 7b, 10a, 10b, 15a, 15b) for detecting the braking force or braking torque, denoted in the following by the collective term braking value;
f) the control electronics (16, 38) are designed in such a manner that their control signals control the pressure control valves (3a, 3b, 5a, 5b, 12a, 12b, 13a, 13b, 31a, 32a), of which there are at last two, in such a way in dependence on the difference in the output signals of the associated braking value-sensing devices that the output signals of the associated braking value-sensing devices (1a, 1b, 7a, 7b, 10a, 10b, 15a, 15b) deviate from one another substantially by a desired value.

2. A brake pressure regulating arrangement for a motor vehicle or a trailer or a vehicle combination with the motor vehicle and the trailer as components, the brake system of which motorvehicle or trailer has pressure medium-operated wheel brakes, the brake pressure of which are controlled at least by way of a manually operable brake application device, having the following features:
a) there are provided additionally at least two electrically controllable pressure control valves (3a, 3b, 5a, 5b, 12a, 12b, 13a, 13b, 31a, 32a) which are associated in each case with at least one wheel brake of the motor vehicle and/or of the trailer and/or of the vehicle combination;
b) the brake application device (4, 8, 9; 34, 31a, 32a, 35, 38, 9) is connected in series on the inlet side or outlet side of the pressure control valves;
c) a sensor device (1a, 1b, 7a, 7b, 10a, 10b, 15a, 15b) is associated with the wheel brake associated in each case with a pressure control valve (3a, 3b, 5a, 5b, 12a, 12b, 13a, 13b, 31a, 32a);
d) control electronics (16, 18) are provided which process output signals of the sensor devices to control signals for the pressure control valves (3a, 3b, 5a, 5b, 12a, 12b, 13a, 13b, 31a, 32a),
characterized by the following features:
e) the sensor devices consist of temperature-sensing devices (1 a, 1 b, 7a, 7b, 10a, 10b, 15a, 15b) for detecting the wheel brake temperature;
f) the control electronics (16, 38) are designed in such a manner that their control signals control the pressure control valves (3a, 3b, 5a, 5b, 12a, 12b, 13a, 13b, 31a, 32a), of which there are at least two, in such a way in dependence on the difference in the output signals of the associated temperature-sensing devices that the output signals of the associated temperature-sensing devices (1 a, 1 b, 7a, 7b, 10a, 10b, 15a, 15b) deviate from one another substantially by a desired value.

3. A brake pressure regulating arrangement according to claim 1, characterized by the feature that: the braking value-sensing device is designed in such a manner that it detects component deformations caused by the braking force or braking torque and delivers deformation-dependent output signals.

4. A brake pressure regulating arrangement according to claim 2, characterized in that the wheel brakes are constructed in a manner known perse as drum or disc brakes and the temperature-sensing device is arranged in the brake lining carrier and/or the brake lining and/or the drum/disc and measures the temperature of the brake lining or of the brake lining carrier.

5. A brake pressure regulating arrangement according to claim 4, characterized in that the temperature-sensing device comprises a plurality of temperature sensors distributed around the periphery and/or across the width of the brake lining carrier and/or brake lining, and the temperature signal corresponds to the arithmetic or weighted mean value of the signals of the individual temperature sensors.

6. A brake pressure regulating arrangement according to one of the preceding claims, characterized in that the pressure control valve is constructed as a blocking and venting valve with a feed-through position, a blocking position and a pressure-reducing position.

7. A brake pressure regulating arrangement according to claim 6, characterized by the following feature: the control electronics (16) are constructed as a comparison and regulating device that compares the output signals delivered from the braking value-sensing devices or the temperature-sensing devices with one another or with a load- dependent desired value optionally obtained from performance date, which desired value takes into account the different total load factors of the axles or of the components of the vehicle combination, and constrains the blocking and venting valve associated with the wheel brakes having the stronger signal compared with the other sensed wheel brakes or with the desired value to move from the feed-through position into the blocking or the pressure-reducing position substantially until the deviation has dropped to zero or to a predetermined limit value, the control electronics optionally additionally being supplied with load signals characterizing the said total load factors.

8. A brake pressure regulating arrangement according to one of claims 1 to 6, characterized by the following features:
a) associated with the wheel brakes and associated with one pressure control valve in each case is a pressure sensor (30a, 30b, 33a, 33b, 36a, 36b, 37a, 37b) which detects the brake pressure delivered to these wheel brakes and the brake-pressure-dependent output signal of which is supplied as brake pressure signal to the control electronics (38);
b) the control electronics (38) are so designed that, from the braking value or temperature signals supplied during or after one or several earlier brake actuations, optionally taking into account the relative total load factor of the axles or components of the vehicle combination associated with the sensed wheel brakes, they calculate and store as the desired value a brake pressure correction value or the performance data thereof, in particular a desired value or desired value performance data, for the difference or the quotient of the brake pressures supplied to the wheel brakes, and upon a brake actuation regulate the brake pressures according to the particular brake pressure correction value through control of the pressure control valves, the load signals characterizing the said total load factors optionally additionally being supplied to the control electronics.

9. A brake pressure regulating arrangement according to claim 8, characterized by the feature that: the control electronics (38) are designed so that they update the brake pressure correction value or its performance data using the braking value and/or temperature signals supplied during or after the brake actuation.

10. A brake pressure regulating arrangement according to one of the preceding claims, characterized in that the brake system of the vehicle combination or at least one of its components has an antilock device (ABS) by which the pressure control valves or the pressure control valves of the relevant component are controllable with priority.

11. A brake pressure regulating arrangement according to one of the preceding claims, characterized by the following feature: the control electronics (16, 38) are so designed that they are disconnected above a predetermined value of the actuating force or the actuator travel or the brake control pressure of the brake application device, or the brake pressure or brake control pressure supplied by this, which in particular represents the case of emergency braking action.

## Revendications

1. Dispositif de réglage de la pression de freinage pour un véhicule automobile, une remorque ou un ensemble de véhicules comprenant comme éléments le véhicule automobile et la remorque, dont l'installation de freinage comprend des freins de roues actionnés par un fluide de pression, et dont les pressions de freinage sont commandées au moins par l'intermédiaire d'un dispositif d'enclenchement du freinage qui peut être actionné arbitrairement, possédant les particularités suivantes :
a) il est prévu en supplément au moins deux valves de réglage de la pression commandées électriquement (3a, 3b, 5a, 5b, 12a, 12b, 13a, 13b, 31a, 32a), dont chacune est associée à au moins un frein de roue du véhicule automobile et/ou de la remorque et/ou de l'ensemble de véhicules ;
b) le dispositif d'enclenchement du freinage (4, 8, 9 ; 34, 31a, 32a, 35, 38, 9) est monté en amont des valves de réglage de la pression, côté commande ou côté arrivée ;
c) un dispositif capteur (1a, 1b, 7a, 7b, 10a, 10b, 15a, 15b) est associé aux freins de roues associés respectivement à une valve de réglage de la pression (3a, 3b, 5a, 5b, 12a, 12b, 13a, 13b, 31a, 32a) ;
d) il est prévu une électronique de commande (16, 38) qui traite les signaux de sortie des dispositifs capteurs pour les transformer en signaux de commande pour les valves de réglage de la pression (3a, 3b, 5a, 5b, 12a, 12b, 13a, 13b, 31a, 32a) ;
caractérisé en ce que :
e) les dispositifs capteurs sont constitués par des dispositifs capteurs de valeur de freinage (1a, 1b, 7a, 7b, 10a, 10b, 15a, 15b) destinés à capter la force de freinage ou le couple de freinage, qu'on désignera dans la suite par le terme collectif de valeur de freinage ;
f) l'électronique de commande (16, 38) est construite de manière que ses signaux de commande commandent au moins deux valves de réglage de la pression (3a, 3b, 5a, 5b, 12a, 12b, 13a, 13b, 31a, 32a) en fonction de la différence des signaux de sortie des dispositifs capteurs de valeur de freinage associés de telle manière que les signaux de sortie des dispositifs capteurs de valeur de freinage (1a, 1b, 7a, 7b, 10a, 10b, 15a, 15b) qui leur sont associés diffèrent l'un de l'autre sensiblement d'une valeur de consigne.

2. Dispositif de réglage de la pression de freinage pour un véhicule automobile, une remorque ou un ensemble de véhicules comprenant comme éléments le véhicule automobile et la remorque, dont l'installation de freinage comprend des freins de roues actionnés par un fluide de pression, et dont les pressions de freinage sont commandées au moins par l'intermédiaire d'un dispositif d'enclenchement du freinage qui peut être actionné arbitrairement, possédant les particularités suivantes :
a) il est prévu en supplément au moins deux valves de réglage de la pression commandées électriquement (3a, 3b, 5a, 5b, 12a, 12b, 13a, 13b, 31a, 32a) , dont chacune est associée à au moins un frein de roue du véhicule automobile et/ou de la remorque et/ou de l'ensemble de véhicules ;
b) le dispositif d'enclenchement du freinage (4, 8, 9 ; 34, 31a, 32a, 35, 38, 9) est monté en amont des valves de réglage de la pression, côté commande ou côté arrivée ;
c) un dispositif capteur (1a, 1b, 7a, 7b, 10a, 10b, 15a, 15b) est associé aux freins de roues associés respectivement à une valve de réglage de la pression (3a, 3b, 5a, 5b, 12a, 12b, 13a, 13b, 31a, 32a) ;
d) il est prévu une électronique de commande (16, 38) qui traite les signaux de sortie des dispositifs capteurs pour les transformer en signaux de commande pour les valves de réglage de la pression (3a, 3b, 5a, 5b, 12a, 12b, 13a, 13b, 31a, 32a) ;
caractérisé en ce que :
e) les dispositifs capteurs sont constitués par des dispositifs capteurs de température (1a, 1 b, 7a, 7b, 10a, 10b, 15a, 15b) destinés à capter la température des freins de roues ;
f) l'électronique de commande (16, 38) est construite de manière que ses signaux de commande commandent au moins deux valves de réglage de la pression (3a, 3b, 5a, 5b, 12a, 12b, 13a, 13b, 31a, 32a) en fonction de la différence des signaux de sortie des dispositifs capteurs de température associés de telle manière que les signaux de sortie des dispositifs capteurs de température (1 a, 1 b, 7a, 7b, 10a, 10b, 15a, 15b) qui leur sont associés diffèrent l'un de l'autre sensiblement d'une valeur de consigne.

3. Dispositif de réglage de la pression de freinage selon la revendication 1, caractérisé en ce que le dispositif capteur de valeur de freinage est construit de telle manière qu'il capte les déformations d'un élément qui sont provoquées par la force de freinage ou par le couple de freinage et qu'il fournisse des signaux de sortie fonction du degré de déformation.

4. Dispositif de réglage de la pression de freinage selon la revendication 2, caractérisé en ce que les freins de roues sont constitués, d'une façon connue en soi, par des freins à tambour ou des freins à disque et le dispositif capteur de température est agencé dans le support de garniture de frein et/ou de la garniture de frein et/ou dans le tambour ou le disque, et mesure la température de la garniture de frein ou du support de garniture de frein.

5. Dispositif de réglage de la pression de freinage selon la revendication 4, caractérisé en ce que le dispositif capteur de température est constitué par une pluralité de capteurs de température répartis sur la circonférence et/ou sur la largeur du support de garniture de frein et/ou de la garniture de frein, et en ce que le signal de température correspond à la moyenne arithmétique ou pondérée des signaux des différents capteurs de température.

6. Dispositif de réglage de la pression de freinage selon une des revendications précédentes, caractérisé en ce que la valve de réglage de la pression est constituée par une valve de maintien et de mise à l'atmosphère, qui comporte une position de passage, une position de maintien et une position de réduction de la pression.

7. Dispositif de réglage de la pression de freinage selon la revendication 6, caractérisé en ce que l'électronique de commande (16) est constituée par un dispositif de comparaison et de régulation qui compare les signaux de sortie qu'il reçoit en provenance des dispositifs capteurs de valeur de freinage ou des dispositifs capteurs de température l'un par rapport à l'autre ou par rapport à une valeur de consigne prédéterminée, fonction de la charge, éventuellement tirée d'un diagramme de caractéristiques, et qui prend en compte les différences de degré de charge existant entre les essieux ou entre les éléments de l'ensemble de véhicules et commande la valve de maintien et de mise à l'air libre associée aux freins de roues présentant un signal plus fort que celui des autres freins de roues contrôlés ou plus fort que la valeur de consigne, pour la faire passer de la position de passage à la position de maintien ou à la position de réduction de la pression sensiblement jusqu'à ce que l'écart soit ramené à zéro ou à une valeur limite prédéterminée, des signaux de charge caractérisant les degrés de charge précités étant éventuellement envoyés à l'électronique de commande.

8. Dispositif de réglage de la pression de freinage selon une quelconque des revendications 1 à 6, caractérisé en ce que :
a) un capteur de pression (30a, 30b, 33a, 33b, 36a, 36b, 37a, 37b) est associé aux freins de roues associés chacun à une valve de réglage de la pression, ce capteur captant la pression de freinage fournie à ces freins de roues et son signal de sortie fonction de la pression de freinage étant envoyé à l'électronique de commande (38) en qualité de signal de pression de freinage ;
b) l'électronique de commande (38) est construite de telle manière qu'à partir des signaux de valeur de freinage ou de température envoyés pendant ou après un ou plusieurs freinages précédents, éventuellement en tenant compte de la différence de degré de charge entre les essieux ou éléments constitutifs de l'ensemble de véhicules qui sont associés aux freins de roues contrôlés, elle calcule et mémorise, en qualité de valeur de consigne, une valeur corrective de pression de freinage ou son diagramme de caractéristiques, en particulier une valeur de consigne ou un diagramme de caractéristiques de valeurs de consigne pour la différence ou le quotient des pressions de freinage envoyées aux freins de roues et, pendant un freinage, règle les pressions de freinage en fonction de la valeur corrective de pression de freinage correspondante, par la commande des valves de réglage de pression, les signaux de charge qui caractérisent les degrés de charge précités étant envoyés éventuellement en supplément à l'électronique de commande.

9. Dispositif de réglage de la pression de freinage selon la revendication 8, caractérisé en ce que l'électronique de commande (38) est construite de manière à actualiser la valeur corrective de pression de freinage ou son diagramme de caractéristiques à l'aide des signaux de valeur de freinage et/ou de température qui sont acheminés pendant ou après le freinage.

10. Dispositif de réglage de la pression de freinage selon une quelconque des revendications précédentes, caractérisé en ce que l'installation de freinage de l'ensemble de véhicules ou d'au moins un de ses éléments constitutifs présente un dispositif anti-blocage (ABS) par lequel les valves de réglage de la pression ou les valves de réglage de la pression de l'élément constitutif considéré peut être commandées en priorité.

11. Dispositif de réglage de la pression de freinage selon une quelconque des revendications précédentes, caractérisé en ce que : l'électronique de commande (16, 38) est construite de manière à être mise hors circuit au-dessus d'une valeur prédéterminée de la force d'actionnement ou de la course d'actionnement, ou de la pression de commande des freins du dispositif d'enclenchement du freinage ou de la pression de freinage débitée par ce dispositif, ou de la pression de commande des freins, valeur qui représente en particulier le cas d'un freinage de détresse.
